# EUROPÄISCHE PATENTSCHRIFT

(11) **EP 1 001 958 B1**
(45) Veröffentlichungstag und Bekanntmachung des Hinweises auf die Patenterteilung: **05.06.2002**
(21) Anmeldenummer: 98943826.2
(22) Anmeldetag: 03.08.1998
(51) Int. Cl.: C07F 9/6568

(54) **VERFAHREN ZUR HERSTELLUNG VON ALUMINIUMSALZEN CYCLISCHER PHOSPHINSÄUREN**
METHOD FOR PRODUCING ALUMINIUM SALTS OF CYCLIC PHOSPHINIC ACID
PROCEDE DE PRODUCTION DE SELS D'ALUMINIUM D'ACIDES PHOSPHINIQUES CYCLIQUES

(30) Priorität: 07.08.1997 DE 19734246
(43) Veröffentlichungstag der Anmeldung: 24.05.2000
(73) Patentinhaber: Ticona GmbH, 65451 Kelsterbach (DE)
(72) Erfinder: SEITZ, Thomas, D-68542 Heddesheim (DE)
(86) Internationale Anmeldenummer: EP9804833
(87) Internationale Veröffentlichungsnummer: WO9907715

(56) Entgegenhaltungen:
- EP-A- 0 498 059
- EP-A- 0 699 708
- EP-A- 0 794 191
- BE-A- 700 042

## Beschreibung

Die Erfindung betrifft ein Verfahren zur Herstellung von Aluminiumsalzen cyclischer gesättigter oder ungesättigter Phosphinsäuren, insbesondere Aluminiumsalze von 1-Hydroxy-dihydrophospholoxiden und 1-Hydroxyphospholanoxiden.

Salze von Phosphinsäuren sind an sich bereits seit längerem bekannt und werden insbesondere als flammhemmende Zusätze für Thermoplaste wie Polyester oder Polyamide empfohlen. So werden in der DE-A1-2252258 Alkalisalze von Phosphinsäuren beschrieben. Sie müssen jedoch in verhältnismäßig großen Mengen zugesetzt werden und haben zum Teil einen ungünstigen korrosionsfördernden Einfluß auf die Verarbeitungsmaschinen.

In der EP-A3-0699708 werden Polyesterformmassen offenbart, die Calciumoder Aluminiumsalze von Phosphinsäuren folgender Formeln enthalten: 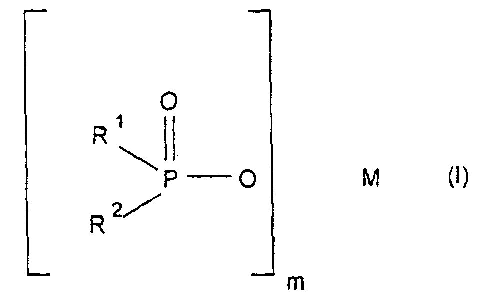 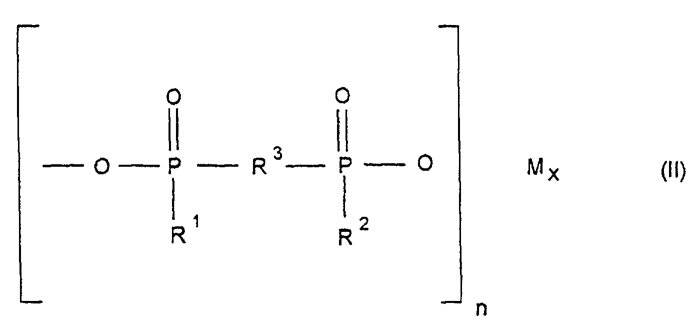 darin bedeuten
- R¹, R²: C₁-C₆-Alkyl, linear oder verzweigt; Phenyl;
- R³: C₁-C₁₀-Alkylen, linear oder verzweigt; Arylen; Alkylarylen; Arylalkylen;
- M: Calcium-, Aluminium-Ionen;
- m: 2 oder 3;
- n: 1 oder 3;
- x: 1 oder 2

Bei der Herstellung der in dieser europäischen Patentanmeldung beschriebenen Aluminiumsalze der dort erwähnten Phosphinsäuren wird eine verhältnismäßig lange Reaktionszeit gefordert, nämlich 24 beziehungweise sogar 65 Stunden.

Obwohl bereits eine ganze Reihe von Phosphinsäureverbindungen und Herstellungsverfahren für diese Verbindungen bekannt sind (siehe zum Beispiel BE-A-700042), besteht noch ein Bedürfnis nach verbesserten Verfahren zur Herstellung von geeigneten Phosphinsäuresalzen, die als Mittel zur Verbesserung der Flammfestigkeit von Kunststoffen eingesetzt werden können.

Aufgabe der Erfindung ist es deshalb, ein Verfahren zur Verfügung zu stellen, mit dem es möglich ist, wertvolle Phosphinsäuresalze herzustellen, die als Flammfestmittel eingesetzt werden können; Aufgabe der Erfindung ist es ferner ein Verfahren zur Verfügung zu stellen, das wirtschaftlich arbeitet und das in kurzen Umsetzzeiten zu hohen Ausbeuten führt. Aufgabe der Erfindung ist es ferner ein Verfahren zur Verfügung zu stellen, das umweltfreundlich arbeitet und bei dem keine oder nur geringe Mengen an Stoffen anfallen, die bei der Isolierung des Endproduktes entfernt und entsorgt werden müssen.

Diese Aufgabe wird gelöst durch ein Verfahren zur Herstellung von Aluminiumsalzen cyclischer Phosphinsäuren, das dadurch gekennzeichnet ist, daß man cyclische Phosphinsäuren mit basischem Aluminiumacetat wie Hydroxyaluminiumdiacetat in Gegenwart von Wasser und in Abwesenheit von polaren Lösungsmitteln in der Wärme in einer Reaktionszeit von 1 bis 20 Stunden umsetzt. Vorzugsweise wird die Umsetzung in einer Zeitspanne von 1 bis 10, insbesondere 3 bis 7 Stunden durchgeführt. Besonders vorteilhaft sind Reaktionstemperaturen von 50 bis 200°C, insbesondere 80 bis 100°C. Es ist vorteilhaft, 1 Mol Säure mit 1/3 Mol basischem Aluminiumacetat in Gegenwart von 0,5 bis 4 ml Wasser, berechnet pro Gramm Säure umzusetzen; vorzugsweise werden 2 bis 3 ml Wasser pro Gramm Säure verwendet.

Als cyclische Phosphinsäuren werden zur Umsetzung mit basischem Aluminiumacetat bevorzugt 1-Hydroxy-dihydrophospholoxide gemäß der Formel Ia oder Ib und 1-Hydroxyphospholanoxide gemäß der Formel Ic oder Gemische davon 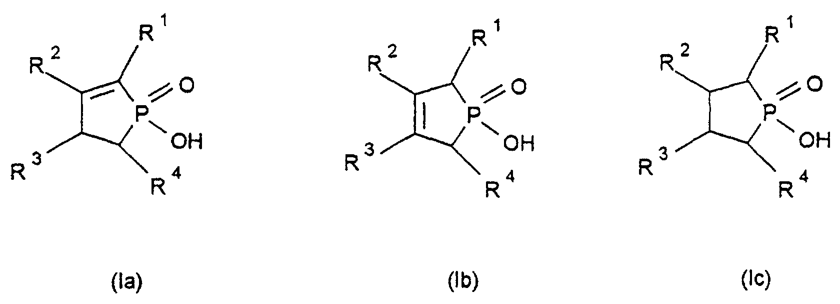 verwendet, worin R¹, R², R³, R⁴ Wasserstoff oder Alkyl bevorzugt C₁-C₁₂-Alkyl, insbesondere C₁-C₄-Alkyl, vorzugsweise Methyl, Ethyl bedeuten.
Man kann die Umsetzung unter Druck durchführen, bevorzugt wird die Umsetzung in einem Autoklaven unter autogenem Druck durchgeführt.

Die erfindungsgemäß eingesetzten cyclischen Phosphinsäuren können durch Hydrolyse entsprechender cyclischer Chlorverbindungen erhalten werden. So wird die Herstellung von 1-Chlor-dihydrophospholoxid und die Hydrolyse dieser Verbindung zu 1-Hydroxy-dihydrophospholoxid in SYN. REACT. INORG. METAL-ORG. CHEM., 5(1), 45-58 (1975) von Kurt Moedritzer beschrieben. Eine weitere Synthesemöglichkeit zur Herstellung von solchen Chlorverbindungen findet sich in der EP-A1-0452755. Die gesättigten cyclischen Phosphinsäuren können durch Hydrierung der entsprechenden ungesättigten cyclischen Phosphinsäuren gewonnen werden.
Zur Herstellung der entsprechenden Aluminiumsalze werden die Phosphinsäuren in Wasser gelöst und mit basischem Aluminiumacetat, vorzugsweise Hydroxyaluminiumdiacetat, umgesetzt. Wenn es auch nicht unbedingt notwendig ist, die Umsetzung in genau stöchiometrischen Verhältnissen durchzuführen, so ist es doch zweckmäßig, pro Mol Säure 1/3 Mol basisches Aluminiumacetat zu verwenden. Auch die bei der Umsetzung verwendete Menge Wasser kann in weiten Bereichen schwanken. Es ist jedoch vorteilhaft, pro Gramm eingesetzte Säure etwa 0,5 bis 4 ml, insbesondere 2 bis 3 ml Wasser einzusetzen.

Die Umsetzung wird in der Wärme durchgeführt, wobei das Reaktionsgemisch vorteilhafterweise während der Umsetzung gerührt wird. Es ist vorteilhaft, eine Temperatur von mindestens 50°C einzuhalten, sehr geeignet ist der Temperaturbereich von 50 bis 200°C und insbesondere von 80 bis 100°C.

Man kann die Reaktion auch sehr gut unter Druck durchführen, wobei Drucke von 1 bis 10 bar, insbesondere von 1 bis 5 bar, besonders vorteilhaft sind.

Als für das erfindungsgemäße Verfahren geeignete cyclische Phosphinsäuren haben sich unter anderem folgende Verbindungen bewährt:

1-Hydroxy-3-methyl-2,5-dihydro-1H-phosphol-1-oxid, 1-Hydroxy-3-methyl-1Hphospholan-1-oxid, 1-Hydroxy-2,3-dihydro-1H-phosphol-1-oxid, 1-Hydroxy-2,5-dihydro-1H-phosphol-1-oxid und 1-Hydroxy-1H-phospholan-1-oxid.

Die Zeiten für die Umsetzung gemäß der Erfindung betragen im allgemeinen höchstens 20 Stunden, liegen jedoch meistens erheblich darunter; es ist vorteilhaft, die Umsetzung innerhalb einer Zeit von 1 bis 10, insbesondere von 3 bis 7 Stunden durchzuführen. Sehr vorteilhaft ist es auch, die Reaktion in einem Autoklaven unter autogenem Druck durchzuführen, das heißt, die Reaktionskomponenten cyclische Phosphinsäure, basisches Aluminiumacetat sowie Wasser werden in einen Autoklaven gebracht und dort unter autogenem Druck zur Umsetzung gebracht, das heißt, die Reaktionsmischung wird im Autoklaven im geschlossenen System erwärmt, so daß die Umsetzung unter dem Druck, der bei der Erwärmung entsteht, durchgeführt wird.

Die Umsetzung wird ohne Zusatz von polaren Lösungsmitteln wie Essigsäure, Propionsäure, Methanol, Ethanol, Propanol, Butanol, Aceton, Methylethylketon, Tetrahydrofuran, Dioxan, Acetonitril und dergleichen durchgeführt.

Es war besonders überraschend, daß es mittels des erfindungsgemäßen Verfahrens möglich ist, innerhalb kurzer Reaktionszeiten die wertvollen Aluminiumsalze von cyclischen gesättigten und ungesättigten Phosphinsäuren herzustellen. Im Gegensatz zu den langen Reaktionszeiten von mehr als 20 Stunden, wie sie für die Herstellung von Aluminiumsalzen von nicht cyclischen Phosphinsäuren erforderlich sind, kann gemäß der Erfindung mit wesentlich kürzeren Reaktionszeiten gearbeitet werden. Meistens reicht eine Reaktionszeit von höchstens 7 Stunden bereits aus, um sehr hohe Ausbeuten zu erhalten.

Das Verfahren liefert sehr wertvolle Aluminiumsalze cyclischer Phosphinsäuren, die insbesondere als Flammschutzmittel für Kunststoffe wie Polyamide, insbesondere Polyester, verwendet werden können.

Da die Umsetzung lediglich 3 Komponenten, nämlich die Phosphinsäure, das basische Aluminiumacetat und Wasser, benötigt, ist das Verfahren auch sehr umweltfreundlich; ein Entfernen und Entsorgen von Nebenprodukten beziehungsweise unerwünschten Stoffen, wie organische Lösungsmittel, ist nicht erforderlich. Es ist lediglich die Entsorgung von geringen Mengen gebildeter Essigsäure in wäßriger Lösung erforderlich.

Die Erfindung wird durch folgende Beispiele näher erläutert.

### 1. Aluminiumsalz des Isomerengemisches aus 1-Hydroxy-2,5-dihydro-1Hphoshol-1-oxid und 1-Hydroxy-2,3-dihydro-1H-phosphol-1-oxid (4: 1)

10,0 g (83,3 mMol) eines Gemisches aus 1-Hydroxy-2,5-dihydro-1H-phosphol-1-oxid und 1-Hydroxy-2,3-dihydro-1H-phosphol-1-oxid (im Verhältnis 4:1) werden in 26,5 ml Wasser gelöst. Bei 80°C gibt man 4,5 g (27,8 mMol) Hydroxyaluminiumdiacetat zu und läßt die Suspension während der angegebenen Reaktionszeit bei 85 bis 90°C rühren. Dann wird bei ca. 60°C abgesaugt und bei 140 bis 150°C im Vakuum-Trockenschrank getrocknet. Man erhält das Reaktionsprodukt als blaßgelbes Pulver mit einem Fp. von > 380°C. Die prozentuale Ausbeute wird durch Wägung des vollständig eingeengten Filtrates bestimmt.

| Nr. 1 | Reaktionsdauer [h] | Ausbeute [g] | Rückstand im Filtrat [g] | Ausbeute [% d.Th.] |
|---|---|---|---|---|
| a | 7 | 10,4 | 0,1 | 99 |
| b | 20 | 10,5 | 0 | 100 |

### 2. Aluminiumsalz von 1-Hydroxy-3-methyl-1H-phospholan-1-oxid

11,0 g (83,3 mMol) 1-Hydroxy-3-methyl-1H-phospholan-1-oxid werden in 26 ml Wasser gelöst. Bei 80°C gibt man 4,5 g (27,8 mMol) Hydroxyaluminiumdiacetat zu und läßt die Suspension während der angegebenen Reaktionszeit bei 85 bis 90°C rühren. Dann wird bei ca. 60°C abgesaugt und bei 100°C im Vakuum-Trockenschrank getrocknet. Man erhält das Reaktionsprodukt als farbloses Pulver mit einem Fp.- von > 380°C. Die prozentuale Ausbeute wird durch Wägung des vollständig eingeengten Filtrates bestimmt.

| Nr. 2 | Reaktionsdauer [h] | Ausbeute [g] | Rückstand im Filtrat [g] | Ausbeute [% d.Th.] |
|---|---|---|---|---|
| a | 7 | 10,8 | 0,8 | 93 |
| b | 20 | 11,2 | 0,4 | 96 |

### 3. Aluminiumsalz von 1-Hydroxy-1H-phospholan-1-oxid

9,83 g (83,3 mMol) 1-Hydroxy-1H-phospholan-1-oxid werden in 26,0 ml Wasser gelöst. Bei 80°C gibt man 4,5 g (27,8 mMol) Hydroxyaluminiumdiacetat zu und läßt die Suspension während der angegebenen Reaktionszeit bei 85 bis 90°C rühren. Dann wird bei ca. 60°C abgesaugt und bei 140°C im Vakuum-Trockenschrank getrocknet. Man erhält das Reaktionsprodukt als farbloses Pulver mit einem Fp. von > 380°C. Die prozentuale Ausbeute wird durch Wägung des vollständig eingeengten Filtrates bestimmt.

| Nr. 3 | Reaktionsdauer [h] | Ausbeute [g] | Rückstand im Filtrat [g] | Ausbeute [% d.Th.] |
|---|---|---|---|---|
| a | 7 | 10,0 | 0,6 | 94 |
| b | 20 | 10,3 | 0,3 | 96 |

### 4. Aluminiumsalz der Ethyl-methyl-phosphinsäure (Vergleichsbeispiel)

10,0 g (92,5 mMol) Ethyl-methyl-phosphinsäure werden in 26 ml Wasser gelöst. Bei 80°C gibt man 5,0 (30,8 mMol) Hydroxyaluminiumdiacetat zu und läßt die Suspension während der angegebenen Reaktionszeit bei 85 bis 90°C rühren. Dann wird bei ca. 60°C abgesaugt und bei 140 bis 150°C im Vakuum-Trockenschrank getrocknet. Man erhält das Reaktionsprodukt als farbloses Pulver mit einem Fp. von > 380°C. Die prozentuale Ausbeute wird durch Wägung des vollständig eingeengten Filtrates bestimmt.

| Nr. 4 | Reaktionsdauer [h] | Ausbeute [g] | Rückstand im Filtrat [g] | Ausbeute [% d.Th.] |
|---|---|---|---|---|
| a | 7 | 7,4 | 3,1 | 69 |
| b | 20 | 9,3 | 1,3 | 87 |

### 5. Aluminiumsalz der Methyl-n-propyl-phosphinsäure (Vergleichsbeispiel)

10,0 g (81,9 mMol) Methyl-n-propyl-phosphinsäure werden in 26 ml Wasser gelöst. Bei 80°C gibt man 4,4 g (27,3 mMol) Hydroxyaluminiumdiacetat zu und läßt die Suspension während der angegebenen Reaktionszeit bei 85 bis 90°C rühren. Dann wird bei ca. 60°C abgesaugt und bei 140 bis 150°C im Vakuum-Trockenschrank getrocknet. Man erhält das Reaktionsprodukt als farbloses Pulver mit einem Fp. von > 380°C. Die prozentuale Ausbeute wird durch Wägung des vollständig eingeengten Filtrates bestimmt.

| Nr. 5 | Reaktionsdauer [h] | Ausbeute [g] | Rückstand im Filtrat [g] | Ausbeute [% d.Th.] |
|---|---|---|---|---|
| a | 7 | 3,1 | 7,1 | 29 |
| b | 20 | 6,0 | 3,7 | 63 |

### 6. Aluminiumsalz der n-Butyl-methyl-phosphinsäure (Vergleichsbeispiel)

10,0 g (73,5 mMol) n-Butyl-methyl-phosphinsäure werden in 16 ml Wasser gelöst. Bei 80°C gibt man 4,0 g (24,5 mMol) Hydroxyaluminiumdiacetat zu und läßt die Supension während der angegebenen Reaktionszeit bei 85 bis 90°C rühren. Dann wird bei ca. 60°C abgesaugt und bei 140 bis 150°C im Vakuum-Trockenschrank getrocknet. Man erhält das Reaktionsprodukt als farbloses Pulver mit einem Fp. von > 380°C. Die prozentuale Ausbeute wird durch W ägung des vollständig eingeengten Filtrates bestimmt.

| Nr. 6 | Reaktionsdauer [h] | Ausbeute [g] | Rückstand im Filtrat [g] | Ausbeute [% d.Th.] |
|---|---|---|---|---|
| a | 7 | 2,4 | 7,7 | 23 |
| b | 20 | 6,3 | 4,1 | 59 |

## Patentansprüche

1. Verfahren zur Herstellung von Aluminiumsalzen cyclischer Phosphinsäuren, **dadurch gekennzeichnet, daß** man cyclische Phosphinsäuren mit basischem Aluminiumacetat in Gegenwart von Wasser und in Abwesenheit von polaren Lösungsmitteln in der Wärme in einer Reaktionszeit von 1 bis 20 Stunden umsetzt.

2. Verfahren nach Anspruch 1, wobei als basisches Aluminiumacetat Hydroxyaluminiumdiacetat eingesetzt wird.

3. Verfahren nach Anspruch 1 oder 2, **dadurch gekennzeichnet, daß** man die Umsetzung in einer Reaktionszeit von 1 bis 10 Stunden durchführt.

4. Verfahren nach Anspruch 3, **dadurch gekennzeichnet, daß** man die Umsetzung in einer Reaktionszeit von 3 bis 7 Stunden durchführt.

5. Verfahren nach einem der Ansprüche 1 bis 4, **dadurch gekennzeichnet, daß** man die Umsetzung bei einer Temperatur von 50 bis 200°C durchführt.

6. Verfahren nach Anspruch 5, **dadurch gekennzeichnet, daß** man die Umsetzung bei einer Temperatur von 80 bis 100°C durchführt.

7. Verfahren nach einem oder mehreren der Ansprüche 1 bis 6, **dadurch gekennzeichnet, daß** man ein Mol cyclische Phosphinsäure mit 1/3 Mol basischem Aluminiumacetat in Gegenwart von 0,5 bis 4 ml Wasser, berechnet pro Gramm Säure, umsetzt.

8. Verfahren nach Anspruch 7, **dadurch gekennzeichnet, daß** man 2 bis 3 ml Wasser pro Gramm Säure verwendet.

9. Verfahren nach einem oder mehreren der Ansprüche 1 bis 8, **dadurch gekennzeichnet, daß** man als cyclische Phosphinsäuren 1-Hydroxy-dihydrophospholoxide gemäß der Formel (la) oder (lb) oder 1-Hydroxyphopspholanoxide gemäß der Formel (lc) oder Gemische davon 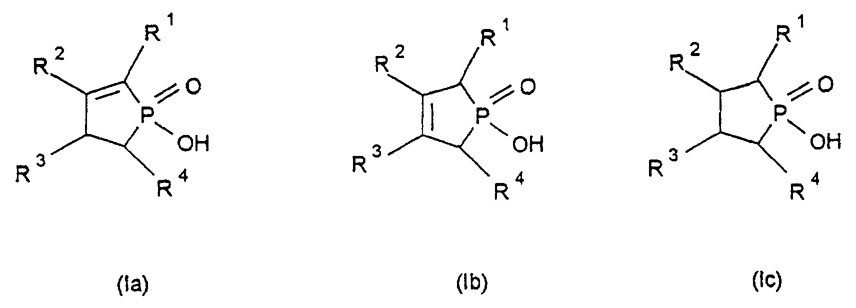 verwendet, worin R¹, R², R³, R⁴ Wasserstoff oder Alkyl bevorzugt C₁-C₁₂-Alkyl, insbesondere C₁-C₄-Alkyl, vorzugsweise Methyl, Ethyl bedeuten.

10. Verfahren nach einem oder mehreren der Ansprüche 1 bis 9, **dadurch gekennzeichnet, daß** man die Umsetzung bei einem Druck von 1 bis 5 bar durchführt.

11. Verfahren nach einem oder mehreren der Ansprüche 1 bis 9, **dadurch gekennzeichnet, daß** man die Reaktion in einem Autoklaven unter autogenem Druck durchführt.

## Claims

1. A process for preparing aluminum salts of cyclic phosphinic acids, which comprises reacting cyclic phosphinic acids with basic aluminum acetate, in the presence of water and in the absence of polar solvents, at elevated temperature, with a reaction time of from 1 to 20 hours.

2. The process as claimed in claim 1, where the basic aluminum acetate used is hydroxyaluminum diacetate.

3. The process as claimed in claim 1 or 2, wherein the reaction time is from 1 to 10 hours.

4. The process as claimed in claim 3, wherein the reaction time is from 3 to 7 hours.

5. The process as claimed in any one of claims 1 to 4, wherein the reaction is carried out at a temperature of from 50 to 200°C.

6. The process as claimed in claim 5, wherein the reaction is carried out at a temperature of from 80 to 100°C.

7. The process as claimed in one or more of claims 1 to 6, wherein one mol of cyclic phosphinic acid is reacted with 1/3 mol of basic aluminum acetate in the presence of from 0.5 to 4 ml of water, calculated per gram of acid.

8. The process as claimed in claim 7, wherein from 2 to 3 ml of water per gram of acid are used.

9. The process as claimed in one or more of claims 1 to 8, wherein the cyclic phosphinic acids used are 1-hydroxydihydrophosphole oxides according to formula (Ia) or (Ib) or 1-hydroxyphospholane oxides according to formula (Ic), or mixtures of these, 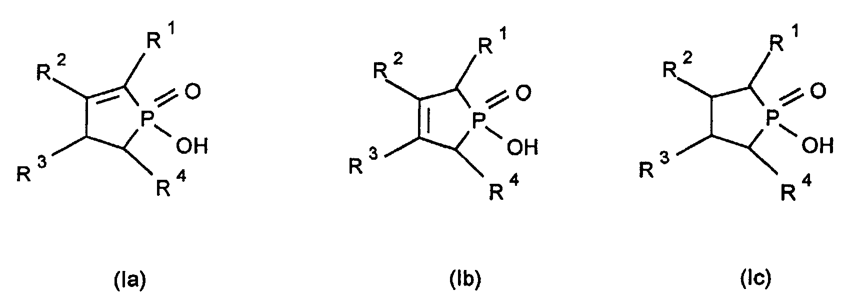 where R¹, R², R³ and R⁴ are hydrogen or alkyl, preferably C₁-C₁₂-alkyl, in particular C₁-C₄-alkyl, preferably methyl or ethyl.

10. The process as claimed in one or more of claims 1 to 9, wherein the reaction is carried out at a pressure of from 1 to 5 bar.

11. The process as claimed in one or more of claims 1 to 9, wherein the reaction is carried out in an autoclave, under autogenic pressure.

## Revendications

1. Procédé de fabrication de sels d'aluminium d'acides phosphiniques cycliques, **caractérisé en ce que** l'on fait réagir des acides phosphiniques cycliques avec de l'acétate d'aluminium basique en présence d'eau et en l'absence de solvants polaires à chaud pendant une durée de réaction de 1 à 20 heures.

2. Procédé selon 1a revendication 1, le diacétate d'hydroxyaluminium étant utilisé en tant qu'acétate d'aluminium basique.

3. Procédé selon la revendication 1 ou 2, **caractérisé en ce que** l'on effectue la réaction pendant une durée de réaction de 1 à 10 heures.

4. Procédé selon la revendication 3, **caractérisé en ce que** l'on effectue la réaction pendant une durée de réaction de 3 à 7 heures.

5. Procédé selon l'une quelconque des revendications 1 à 4, **caractérisé en ce que** l'on effectue la réaction à une température de 50 à 200°C.

6. Procédé selon la revendication 5, **caractérisé en ce que** l'on effectue la réaction à une température de 80 à 100°C.

7. Procédé selon l'une quelconque des revendications 1 à 6, **caractérisé en ce que** l'on fait réagir une mole d'acide phosphinique avec 1/3 de mole d'acétate d'aluminium basique en présence de 0,5 à 4 ml d'eau, sur la base d'un calcul par gramme d'acide.

8. Procédé selon la revendication 7, **caractérisé en ce que** l'on utilise 2 à 3 ml d'eau par gramme d'acide.

9. Procédé selon l'une quelconque des revendications 1 à 8, **caractérisé en ce que** l'on utilise, en tant qu'acides phosphiniques, des 1-hydroxydihydrophospholoxydes selon la formule (1a) ou (1b) ou des 1-hydroxyphospholanoxydes selon la formule (1c) ou des mélanges de ces derniers 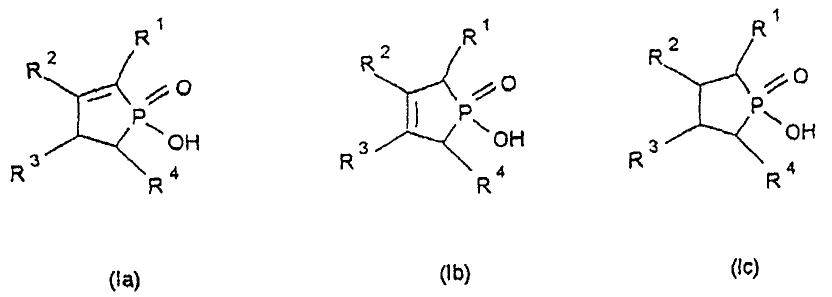 dans lesquelles R¹, R², R³, R⁴ désignent l'hydrogène ou un radical alkyle, de préférence un radical alkyle en C₁-C₁₂, en particulier un radical alkyle C₁-C₄, de préférence les radicaux méthyle, éthyle.

10. Procédé selon l'une quelconque des revendications 1 à 9, **caractérisé en ce que** l'on effectue la réaction à une pression de 1 à 5 bars.

11. Procédé selon l'une quelconque des revendications 1 à 9, **caractérisé en ce que** l'on effectue la réaction dans un autoclave sous une pression autogène.
